# EUROPEAN PATENT APPLICATION

(11) **EP 2 336 882 A1**
(43) Date of publication of application: **22.06.2011**
(21) Application number: 09015723.1
(22) Date of filing: 18.12.2009
(51) Int. Cl.: G06F 9/45

(54) **Technique for run-time provision of executable code using off-device services**

(71) Applicant: Telefonaktiebolaget L M Ericsson (PUBL), S-164 83 Stockholm (SE)
(72) Inventor: Persson, Jan Patrik, 222 29 Lund (SE); Persson, Per, 24734 Södra Sandby (SE)
(74) Representative: Röthinger, Rainer

(57) **Abstract**

A technique for obtaining executable code by a multi-core client device comprising a host core and at least one processing element implemented on a core different from the host core is provided. A method embodiment of this technique comprises the following steps performed by the host core at run-time of a host program: determining a non-executable code portion embedded in the host program; requesting executable code for a detected non-executable code portion from a remote network server; receiving the requested executable code from the network server; and providing the received executable code for execution by the processing element. The host program may conform to the OpenCL framework or any other framework that permits the embedding of non-executable code portions in an executable host program.

## Description

### Technical Field

The present disclosure generally relates to the provision of executable code during run-time of a program executed on a client device. Specifically, a technique involving off-device provisioning services is described.

### Technical Background

Today, operating frequencies of Central Processing Units (CPUs) are more or less stagnating and, in some cases, even decreasing. For this reason, heterogeneous processing devices with multiple processor cores become more and more important to cope with processing demands that are still increasing. Modern heterogeneous multi-core devices may, for example, comprise CPU cores, Graphical Processing Unit (GPU) cores, Digital Signal Processor (DSP) cores, and so on.

The heterogeneity of multi-core devices requires portable applications executable on target devices having different hardware configurations and different execution platforms. Such portable applications can be based on executable files holding bytecode. A device-specific virtual machine (such as a Java Virtual Machine, JVM) interprets and executes the bytecode or translates the bytecode into executable code (i.e., binary or machine code) using run-time compilation.

Mobile devices such as cellular telephones, smartphones and Personal Digital Assistants (PDAs) are becoming increasingly powerful and are therefore promising candidates for heterogeneous multi-core systems. However, mobile devices have constrained resources in terms of processing capacities, battery power, and so on. It has thus been suggested releasing the available resources from compilation tasks by using off-device compilation services adapted to the specific hardware and software environment of the mobile device.

WO 2009/055731 A1 describes an exemplary off-device compilation scenario for a mobile client device. Source code is stored in a memory of the client device via a local file system. On a CPU of the client device, a program (e.g., an installer application) configured to retrieve the source code files is executed. Initially, the client program generates a code compilation request indicative of a hardware and software environment of the client device. The code compilation request is then sent to a remote network server that responds with an acceptance message should the server have the ability to compile the code for the indicated hardware and software environment.

Having received the acceptance message, the client program retrieves a source code file via the local file system and sends it to the server. The server compiles the received source code to generate executable code (adapted to the specific hardware and software environment of the client device) and returns the compiled code to the client device. The client device may store the compiled code at the local file system. Alternatively, the client program may resume execution using the compiled code. The client device may issue different compilation requests for different components of a single piece of software to be subsequently processed by different processor cores.

### Summary

There is a need for a more efficient technique for obtaining executable code from an off-device service.

According to a first aspect, a method of obtaining executable code for a client device comprising a host core and at least one processing element implemented on a core different from the host core is provided. The method comprises the following steps performed by the host core at run-time of a host program executed by the host core: determining a non-executable code portion embedded in the host program; requesting executable code for the detected non-executable code portion from a remote network server; receiving the requested executable code from the network server; and providing the received executable code for execution by the processing element. As an example, providing the received executable code for execution may comprise storing the executable code by the client device.

The method may further comprise triggering execution of the received executable code by the processing element. This triggering step may be performed by the host core at run-time of the host program or in any other manner. The received executable code may be executed immediately after receipt (e.g., in the next clock cycle) or at a later point in time. Moreover, there may also be scenarios in which the received code is never executed (e.g., in cases in which the received code belongs to an if-branch that is never passed).

In one implementation, the process of requesting the executable code comprises extracting the non-executable code portion from host program, and sending the extracted non-executable code portion to the network server. The non-executable code portion may, for example, comprise source code. The host program may be provided in bytecode format.

The non-executable code portion may be embedded in the host program in various ways. For example, the non-executable code portion may itself be embedded in the host program or may be embedded in the host program in the form of a link, reference or identifier pointing to a location of the non-executable code portion. This location may be on the client device itself or in the network. According to one variant, the non-executable code portion is embedded in the host program in the form a character string. The character string may comprise the non-executable code portion in the form of a source code. Alternatively, the character string may take the form of a Universal Resource Locator (URL) string pointing to the non-executable code portion. The URL may, for example, point to the remote network server and, in one scenario, to the specific executable code to be requested.

The method may further comprise the steps of determining a mode setting of the device, and sending information indicative of the mode setting to the network server. The network server may then obtain the executable code taking into account the mode setting information. In a further variation, a mode setting change of the device may be determined. In response to determining the mode setting change, a new request for the executable code may be triggered. The executable code received in response to this new request may have been obtained by the network server taking into account the new mode setting. The mode setting may generally relate to one or more operating modes of the device. These operating modes may, for example, comprise at least one of a performance mode (e.g., high performance/low performance) and a power mode (e.g., regular power mode/power saving mode). It should be noted that the mode setting-related features could also be applied in single-core scenarios (e.g., in scenarios in which no differentiation between the host core on the one hand and the processing element on the other is made).

In one scenario, the executable code is received in at least one of an encrypted format and a signed format. In this scenario, the method may further comprise decrypting the received executable code (e.g., prior to triggering the execution of the executable code). In addition, or as an alternative, the method may comprise checking a signature applied to the executable code (e.g., prior to triggering execution of the executable code). Moreover, the non-executable code portion extracted from the host program may also be at least one of encrypted and signed before being sent to the network server.

The executable code received from the network server may be stored in a local cache of the client device and may be retrieved from the cache in the case of a further execution of the host program or a further detection of the non-executable code portion within the host program. Thereafter, execution of the retrieved executable code by the processing element may be triggered. In such a caching scenario on the client side, the network server and network connections are disburdened from unnecessary repetitive tasks.

The host program may be executed by a virtual machine running on the host core. The virtual machine may be based on Java. In one implementation, the host program is written in accordance with the OpenCL standard. However, the host program may also be written in any other language that allows embedding a computation task that needs to be compiled at run-time (e.g., in source code format) within a program.

The device may be running an operating system compatible with executable files holding bytecode such as the host program. As one example, the Android operating system may be running on the device, and the host program may an Android application or a part of an Android application. Instead of the Android operating system and Android application, other Java-based operating systems and applications may be implemented as well on the device.

According to another aspect, a method of providing executable code to a client device is provided. The client device comprises a host core and at least one processing element implemented on a core different from the host core, wherein the host core is running a host program comprising an embedded non-executable code portion. The method comprises the following steps performed by a network server at run-time of the host program: receiving a request for an executable code relating to the embedded non-executable code; obtaining the requested executable code; and sending the obtained executable code to the device. The executable code request may include the executable code itself or a reference to the executable code. As an example, the executable code request may be based on an URL.

In one implementation, obtaining the requested executable code comprises compiling the non-executable code portion to generate the requested executable code. In another implementation, the requested executable code is retrieved by the network server from a local cache or database. Such a retrieval may be based on a code identifier received together with the executable code request.

According to a still further variant, the network server is adapted to receive at least one of hardware information, software information and mode setting information pertaining to the device. The non-executable code portion may in such an implementation be obtained (e.g., compiled or retrieved) taking into account at least one of the hardware information, the software information and the mode setting information.

According to a further aspect, a computer program product is provided which comprises program code portions for performing the steps of any of the methods and method aspects described herein when the computer program product is executed on one or more computing devices, for example on a mobile client device such as a smartphone. The computer program product may be stored on a computer-readable recording medium, such as a permanent or re-writable memory within or associated with the computing device, a CD-ROM, DVD, and so on. Additionally, or in the alternative, the computer program product may be provided for download to the computing device, for example via a data network such as the Internet and/or a communication connection such as a telephone line or a wireless link.

According to a still further aspect, a client device is provided. The client device comprises a host core adapted to execute a host program and to determine, at run time of the host program, a non-executable code portion embedded in the host program. The client device further comprises an interface adapted to request executable code for the detected non-executable code portion from a remote network server and to receive the requested executable code from the network server, and at least one processing element implemented on a core different from the host core, wherein the host core is further adapted to provide, at run-time of the host program, the received executable code for execution by the processing element.

The client device may be configured in the form of a stationary or a mobile terminal. In a mobile configuration, the client device may be realized in the form of a cellular telephone, a smartphone, a PDA, a netbook, a notebook, and so on. The client device may comprise wireless communication capabilities for communicating, via a wireless link, with the remote network server.

According to a complementary aspect, a network server configured to provide executable code to a client device comprising a host core and at least one processing element implemented on a core different from the host core is provided. The host core is running a host program comprising an embedded non-executable code portion. The network server comprises an interface adapted to receive a request for executable code relating to the embedded non-executable core portion and a component adapted to obtain the requested executable code at run-time of the host program, wherein the interface is further adapted to send the executable code to the device.

The component adapted to obtain the requested executable code may be configured as a compiler, as a cache temporarily holding executable code that has been compiled by the network server earlier, or as a database holding pre-compiled executable code. The executable code may be obtained by the network server taking into account at least one of hardware information, software information, and mode setting information pertaining to the client device.

### Brief Description of the Drawings

In the following, the present disclosure will be described in more detail with reference to exemplary embodiments illustrated in the drawings, in which:
- Fig. 1: illustrates a schematic overview of a system for requesting and providing executable code comprising a client device embodiment and a network server embodiment; and
- Fig. 2: shows a schematic flow chart illustrating the operation of the client device and the network server of Fig. 1 in exemplary method embodiments.

### Detailed Description

In the following description, for purposes of explanation and not limitation, specific details are set forth to provide a thorough understanding of the present disclosure. It will be apparent to one skilled in the art that the technique disclosed herein may be practiced in other embodiments that depart from these specific details. For example, while the following embodiments will primarily be described in relation to the OpenCL framework, the skilled artisan will appreciate that the present disclosure is not limited to such an implementation. Accordingly, the terms and expressions used herein must not be construed to be limited to an OpenCL realization of the present disclosure.

Those skilled in the art will further appreciate that the functions explained herein may be implemented using individual hardware circuitry, using software functioning in conjunction with a programmed microprocessor or general purpose computer, using an Application Specific Integrated Circuit (ASIC) or using one or more DSPs. It will also be appreciated that the technique described herein could be embodied in a microprocessor and a memory coupled to the microprocessor, wherein the memory is encoded with one or more programs that perform the methods and method aspects disclosed herein when executed by the processor.

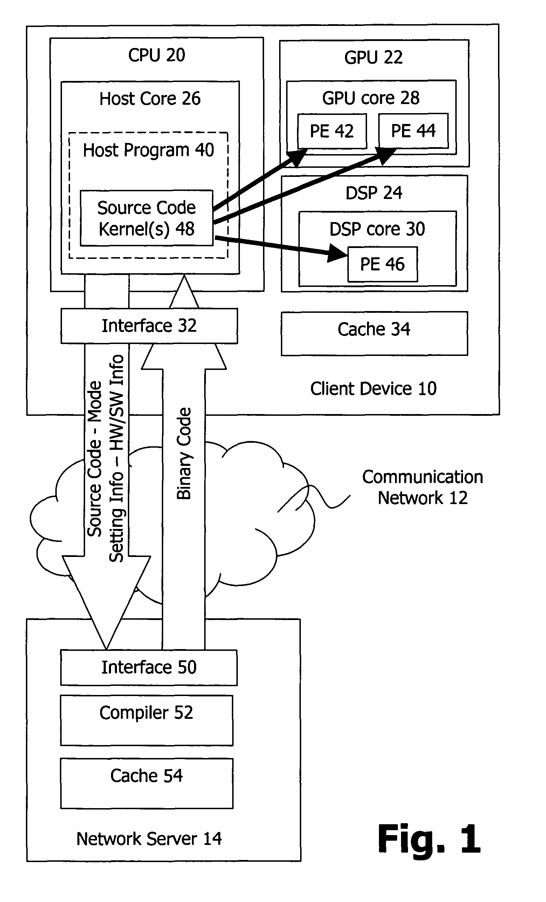

Fig 1. illustrates a system for requesting and obtaining executable code using an off-device code provisioning service. The system comprises a client device 10 configured to communicate via a communication network 12 with a remote network server 14. In the present embodiment, the client device 10 is configured as a mobile terminal such as a smartphone. The communication network 12 comprises one or more wireless links based, for example, on GSM, W-CDMA or LTE communication technology. The network server 14 is located in a core network of a service provider or network operator.

As illustrated in Fig. 1, the client device 10 has a heterogeneous configuration and comprises multiple processors including at least a CPU 20, a GPU 22 and a DSP 24. Each processor 20, 22, 24 comprises one or more processor cores 26, 28, 30. The client device 10 further comprises an interface 32 adapted to communicate with the network server 14. The interface 32 may be realized in the form of software, in the form of hardware or as a combination thereof. The interface 32 is adapted to request and receive executable code from the network server 14. A local cache 34 of the client device is adapted to temporarily store the executable code received from the network server 14 for immediate or later execution by one or more of the processor cores 26, 28, 30.

The network server 14 comprises an interface 50 adapted to communicate with the client device 10. Similar to the interface 32 of the client device 10, the interface 50 of the network server 14 may be realized in the form of software, in the form of hardware or as a combination thereof. The network server 14 further comprises a component 52 adapted to obtain the executable code requested by the client device 10. In the exemplary implementation illustrated in Fig. 1, the component 52 is configured as a compiler. It will be appreciated that the component 52 may also be realized in different ways, for example in the form of a database holding pre-compiled executable code for a plurality of code functions that may by requested by the client device 10. Still further, the network server 14 comprises a cache 54 for caching executable code compiled by the component 52. Provision of the cache 54 disburdens the component 52 from repeatedly performing similar compilations tasks.

In the present embodiment, Android or another Java-based operating system executable in the form of a virtual machine is installed on the client device 10 for being executed by the CPU 20. The OpenCL framework as defined by the Khronos OpenCL Working Group (see, e.g., OpenCL Specification Version 1.0, document revision 29 of 12/8/08) is utilized for the programming of the heterogeneous collection of the CPU 20, GPU 22 and DSP 24.

Generally, an OpenCL application can be regarded as a combination of programs running on a host ("host program") on the one hand and on one or more OpenCL devices ("kernels") on the other. In the present embodiment, a host program 40 will be executed on the core 26 ("host core") of the CPU 20, while OpenCL devices are realized by the GPU 22 and the DSP 24. Each OpenCL device is defined as a collection of compute units, and each compute unit is composed of one or more Processing Elements (PEs). In the embodiment illustrated in Fig. 1, the GPU core 28 comprises two such PEs 42, 44, and the DSP core 30 comprises a single PE 46.

The host program 40 executed on the host core 26 is configured to submit commands to the GPU 22 and DSP 24 to realize computation tasks on the PEs 42, 44, 46. The computation tasks are defined by one or more kernels 48 declared in the host program 40 and embedded in the host program in the form of non-executable source code portions. The host program 40 itself may be provided in the form of bytecode executable by the virtual machine running on the CPU 20.

The following source code snippet illustrates how one of the kernels 48 is embedded in the form of a character string into the source code of the host program 40:

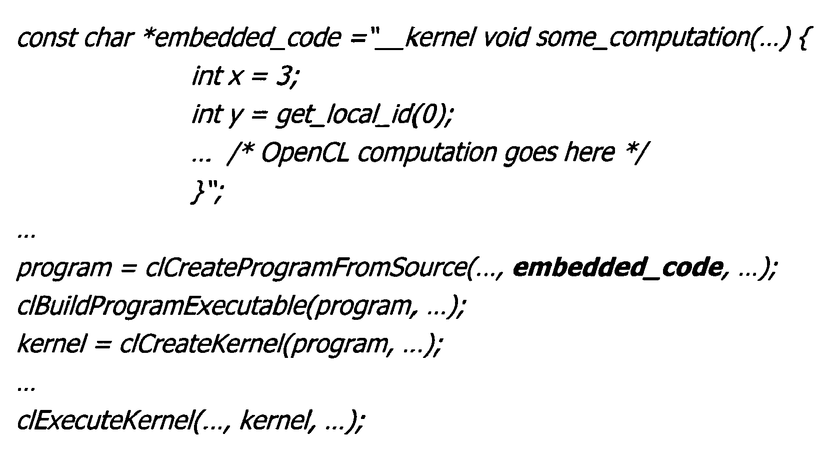

It will be appreciated that even after translating the host program 40 into bytecode, the kernels 48 will remain embedded in the resulting bytecode in their source code representation (e.g., in the form of character strings). The embedded source code representations will only be compiled at run-time of the host program 40 (typically during application launch) by the network server 14.

It will further be appreciated that instead of embedding a source code string into the host program 40, the source code could also be embedded in the form of an URL string pointing to the network server 14 (and, in one embodiment, referencing by an identifier the source code to be compiled or the pre-compiled code that is requested). Moreover, the source code may also be embedded into the host program 40 in the form of a reference to a file stored in the client device 10 together with the host program 40 (e.g., in the form of an application bundle).

The use of off-device compilation services provided by the network server 14 disburdens the client device 10 from the need to implement a sophisticated compiler that would require considerable processing and memory resources. This means that the client device 10 may be capable of executing OpenCL applications, but not of performing the required compilation tasks. Thus, the client device 10 may in fact be precluded from fully using the OpenCL framework, as the computational resources of the client device 10 may not be usable for compilation tasks (the OpenCL framework lends itself to parallel computing tasks, but a compiler is traditional sequential program).

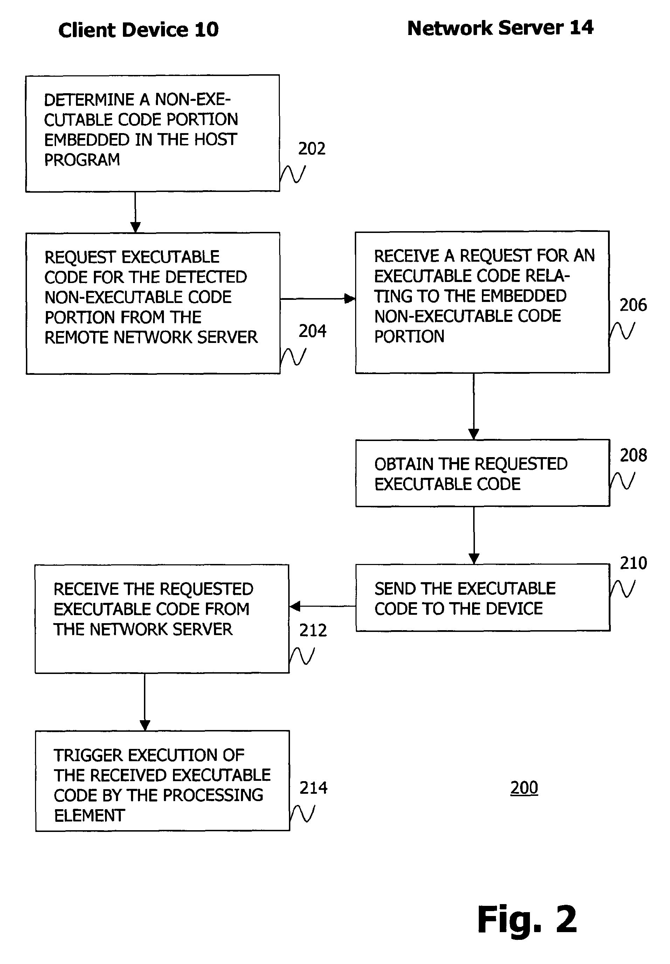

While ahead-of-time compilation might in certain scenarios be a feasible alternative to off-device compilation, the portability of typical Android applications makes ahead-of-time compilation unpractical: ahead-of-time compilation would result in executable code (i.e., binary or machine code) specifically tailored to the hardware and software environment of a particular target device, thus defeating the idea of bytecode execution. Rather than performing the OpenCl compilation tasks on the resource-constrained client device 10, the source code kernels 48 are therefore passed to the less-constrained network server 14, which returns the requested executable code as will now be described in more detail with reference to the schematic flow diagram 200 of Fig. 2. The various steps illustrated in Fig. 2 are performed at run-time of the host program 40.

Upon execution of the host program 40 in bytecode format on the CPU 20, one or more non-executable code portions corresponding to the one or more source code kernels 48 will in an initial step 202 be determined as being embedded in the host program. This determination may, for example, be based on detecting the function *c*/*CreateProgramFromSource* for each source code kernel 48 in the host program 40 (see the above source code snippet of the host program 40). Conventionally, this function is implemented to invoke a local OpenCL run-time compiler. In the present embodiment, the function is instead implemented to request executable code for the source code kernel 48 from the network server 14. To this end, an executable code request is generated for the detected source code kernel 48. Then, in step 204, this request is sent via the interface 32 to the network server 14.

In one variant, the embedded source code kernel 48 is extracted as a source code string from the host program 40, and the request includes the extracted source code kernel 48 for which executable code is requested. In another variant, only an identifier of the source code kernel 48 is transmitted together with the request to the network server 14 as, in certain scenarios, the transmission of the source code kernel 48 can be omitted. As an example, the source code kernel 48 may have already been transmitted earlier (e.g., upon an earlier detection of the source code kernel 48 in the host program 40), or the network server 14 may have access to the source code kernel 48 via a local database. The identifier of the source code kernel 48 may be derived from an URL string embedded in the host program 40.

In addition to the source code kernel 48 or an identifier thereof, further information may be sent to the network server 14. This additional information may relate to the specific hardware and software environment of the client device 10 to make sure that the compiled code returned by the network server 14 conforms to the hardware and software environment deployed on the client device 10. Additionally, or as an alternative, mode setting information pertaining to the client device 10 may be transmitted to the network server 14. This additional information may be used by the network server 14 when obtaining the requested executable code as will be described below.

In step 206, the executable code request is received by the network server 14 via the interface 50. The request is accompanied by the source code kernel 48 or its identifier (and, optionally, by hardware/software information and/or mode setting information pertaining to the device). In a next step 208, the network server 14 obtains the requested executable code pertaining to the source code kernel 48. In one embodiment, the component 52 of the network server compiles the source code kernel 48 received via the request (or retrieved from a local database) to generate the requested executable code (i.e., binary or machine code). In an alternative embodiment, the requested executable code is readily available in the server cache 54 (e.g., because a similar compilation task has already been requested by the client device 10 or another client device earlier).

When compiling the source code kernel 48 or retrieving the compiled executable code from the cache 54 or the local database, the additional information received from the client device 10 may be taken into account. For example, the compilation process may be controlled such that the compiled code conforms to the specific hardware and software environment of the client device 10. As an additional or alternative measure, the compilation may be controlled such that the specific mode setting information received from the client device 10 is considered. As an example, the mode setting information may relate to at least one of a performance mode (such as high performance/low performance) and a power mode (such as regular power mode/power saving mode) currently activated in the client device 10. In other words, the compilation may be controlled such that the resulting executable code assists, for example, power saving or high performance (e.g., gaming) settings of the client device 10.

In one implementation, the client device 10 is configured to transmit, after an initial request for executable binary code, a new request to the network server 14 upon determining a mode setting change (e.g., from a regular power mode to a power saving mode or vice versa). As the source code kernel 48 for which executable code is requested may have been cached by the network server 14 when processing the initial request, the transmission of an identifier of the source code kernel 48 together with an indication of the mode setting change might suffice. The network server 14 then re-compiles the (cached) source code kernel 48 taking into account the new mode setting of the client device 10.

Once the executable code has been obtained by compilation or any other means, the network server 14 returns the executable code via the interface 50 and the communication network 12 to the client device 10 in step 210. The executable code is then received by the client device 10 via interface 32 in step 212. Moreover, in step 214, the host program 40 stores the received code in the local cache 34 and triggers execution of the received executable code by the associated processing element 42, 44 or 46. In the case of tasks which are to be performed in parallel (such as certain graphical tasks), the host program 40 may trigger execution of the received executable code by two or more PEs (such as PE 42 and PE 44 of GPU core 28) in parallel.

It should be noted that the executable code need not be executed immediately (e.g., in the next clock cycle after receipt thereof) but could also be executed at a later point in time. Moreover, in certain scenarios the received executable code may never be executed (e.g., in cases in which execution depends on a conditional code statement with the condition being never fulfilled).

The executable code received for the source code kernel 48 from network server 14 may remain stored in the local cache 34 of the client device 10 for further (second, third, etc.) executions. Such further executions may occur in the context of a further launch of the host program or in the context of a further detection of the source code kernel 48 within the running host program 40. Hence, executable code requests will be issued by the client device relatively infrequently, for example when a recompilation is required because the client device 10 has entered a new power mode which causes one or more of the cores 28, 30 to be powered down (e.g., when entering a stand-by mode or a music playing mode).

In certain embodiments, the non-executable code transferred from the client device 10 to the network server 14 and/or the executable code transferred back from the network server 14 to the client device 10 may be signed (e.g., using Public Key Infrastructure, PKI) to avoid inadvertent code tempering by third parties. Moreover, encryption techniques may be used to make the code unreadable for third parties. In such implementations, a signature checking step and/or a decryption step may be implemented prior to code compilation and/or code execution.

As has become apparent from the above description of advantageous implementations, the technique disclosed herein allows the employment of off-device code provisioning services in combination with the OpenCL framework or any other framework in which non-executable code portions are embedded within a host program. Such techniques are particularly beneficial in the case of resource-constrained client devices running Android or similar operating systems for which executable files are expected to be portable.

While the technique presented herein has been described in relation to its preferred embodiments, it is to be understood that this description is for illustrative purposes only. Accordingly, it is intended that the invention be limited only by the scope of the claims appended hereto.

## Claims

1. A method of obtaining executable code by a client device (10) comprising a host core (26) and at least one processing element (42, 44, 46) implemented on a core (28, 30) different from the host core (26), the method comprising the following steps performed by the host core (26) at run-time of a host program (40):
- determining a non-executable code portion (48) embedded in the host program (40);
- requesting executable code for the detected non-executable code portion (48) from a remote network server (14);
- receiving the requested executable code from the network server (14); and
- providing the received executable code for execution by the processing element (42, 44, 46).

2. The method of claim 1, wherein requesting the executable code comprises extracting the non-executable code portion (48) from the host program (40) and sending the extracted non-executable code portion (48) to the network server (14).

3. The method of claim 1 or 2, wherein the non-executable code portion (48) is embedded in the host program (40) in the form of a source code string, in the form of an identifier referencing the non-executable code portion (48) or in the form of a Universal Resource Locator (URL) string pointing to the non-executable code portion (48).

4. The method of any of the preceding claims, further comprising:
- determining a mode setting of the device (10); and
- sending information indicative of the mode setting to the network server (14).

5. The method of any of the preceding claims, further comprising:
- determining a mode setting change of the device (10); and
- triggering a new request for the executable code responsive to the mode setting change.

6. The method of claim 4 or 5, wherein the mode setting relates to at least one of a performance mode and a power mode.

7. The method of any of the preceding claims, wherein the executable code is received in at least one of an encrypted format and a signed format, and further comprising at least one of the following steps:
- decrypting the received executable code; and
- checking a signature applied to the executable code.

8. The method of any of the preceding claims, further comprising:
- storing the received executable code in a local cache (34);
- retrieving the executable code from the cache (34) in the case of a further execution of the host program (40) or a further determination of the non-executable code portion within the host program (40).

9. The method of any of the preceding claims, wherein the host program (40) is executed by a virtual machine running on the host core (26).

10. The method of any of the preceding claims, wherein the host program is written in accordance with the OpenCL standard.

11. The method of any of the preceding claims, wherein the device (10) is running an Android operating system.

12. A method of providing executable code to a client device (10) comprising a host core (26) and at least one processing element (42, 44, 46) implemented on a core (28, 30) different from the host core (26), wherein the host core (26) is running a host program (40) comprising an embedded non-executable code portion (48), the method comprising the following steps performed by a network server (14) at run-time of the host program (40):
- receiving a request for an executable code relating to the embedded non-executable code portion (48);
- obtaining the requested executable code; and
- sending the obtained executable code to the device (10).

13. The method of claim 12, wherein obtaining the requested executable code comprises compiling the non-executable code portion (48) to generate the requested executable code.

14. The method of claim 12 or 13, further comprising:
- receiving at least one of hardware information, software information and mode setting information pertaining to the device (10); and
- obtaining the non-executable code portion taking into account at least one of the hardware information, the software information, and the mode setting information.

15. A computer program product comprising program code portions for performing the steps of any of the preceding claims when the computer program product is run on the apparatus.

16. The computer program product of claim 15, stored on a computer- readable recording medium.

17. A client device (10) comprising :
- a host core (26) adapted to execute a host program (40) and to determine, at run-time of the host program (40), a non-executable code portion (48) embedded in the host program (40);
- an interface (32) adapted to request executable code for the detected non-executable code portion (48) from a remote network server (14) and to receive the requested executable code from the network server (14); and
- at least one processing element (42, 44, 46) implemented on a core (28, 30) different from the host core (26), wherein the host core (26) is further adapted to provide, at run-time of the host program (40), the received executable code for execution by the processing element (42, 44, 46).

18. A network server (14) configured to provide executable binary code to a client device (12) comprising a host core (26) and at least one processing element (42, 44, 46) implemented on a core (28, 30) different from the host core (26), wherein the host core (26) is running a host program (40) comprising an embedded non-executable code portion (48), the server (14) comprising:
- an interface (50) adapted to receive a request for executable code relating to the embedded non-executable code portion (48);
- a component (52) adapted to obtain the requested executable code at run-time of the host program; and
- wherein the interface (50) is further adapted to send the executable code to the device (10).
